# EUROPÄISCHE PATENTSCHRIFT

(11) **EP 1 773 537 B1**
(45) Veröffentlichungstag und Bekanntmachung des Hinweises auf die Patenterteilung: **13.06.2012**
(21) Anmeldenummer: 05773750.4
(22) Anmeldetag: 03.08.2005
(51) Int. Cl.: B23P 17/06, B23C 3/00, F01N 3/022, B01D 39/20

(54) **VERFAHREN ZUR HERSTELLUNG METALLISCHER FASERN SOWIE VERFAHREN ZUR HERSTELLUNG VON FILTERMATERIAL**
METHOD OF PRODUCTION OF METAL FIBRES AND METHOD OF PRODUCTION OF FILTER MATERIAL
PROCÉDÉ DE FABRICATION DE FIBRES METALLIQUES ET PROCÉDÉ DE FABRICATION DE MATÉRIAU DE FILTRES

(30) Priorität: 06.08.2004 DE 102004038331
(43) Veröffentlichungstag der Anmeldung: 18.04.2007
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HODGSON, Jan, 53840 Troisdorf (DE); HÄRIG, Thomas, 53819 Neunkirchen-Seelscheid (DE); HIRTH, Peter, 51503 Rösrath (DE)
(74) Vertreter: Rössler, Matthias
(86) Internationale Anmeldenummer: PCT/EP2005/008404
(87) Internationale Veröffentlichungsnummer: WO 2006/015783

(56) Entgegenhaltungen:
- EP-A- 0 764 455
- WO-A-02/23019
- DE-A1- 19 531 826
- GB-A- 1 051 275
- US-A- 4 298 660
- US-A- 4 640 156
- PATENT ABSTRACTS OF JAPAN Bd. 007, Nr. 165 (M-230), 20. Juli 1983 (1983-07-20) -& JP 58 071002 A (SHINGIJIYUTSU KAIHATSU JIGIYOUDAN), 27. April 1983 (1983-04-27)
- PATENT ABSTRACTS OF JAPAN Bd. 2000, Nr. 09, 13. Oktober 2000 (2000-10-13) -& JP 2000 167721 A (KOGI CORP), 20. Juni 2000 (2000-06-20)
- PATENT ABSTRACTS OF JAPAN Bd. 004, Nr. 132 (M-032), 17. September 1980 (1980-09-17) -& JP 55 090235 A (KOBE STEEL LTD), 8. Juli 1980 (1980-07-08)
- DEGARMO E PAUL, BLACK J TEMPLE & KOHSER RONALD A: "Materials and Processes in Manufacturing (6th edition)" 1984, MACMILLAN , NEW YORK , XP002352400 Abbildungen 22-16
- HEILER T: "Technisches Bildworterbuch für spanende werkzeuge zur Metallbearbeitung" 1979, CARL HANSER VERLAG , MÜNCHEN , XP002352401 Seite 207, mittlere Spalte, Zeile 7 - Zeile 12; Abbildung b

## Beschreibung

Die Erfindung betrifft ein Verfahren zur Herstellung metallischer Fasern gemäß dem Oberbegriff des Anspruchs 1. Ein solches Verfahren ist aus der JP 2000-167 721 A bekannt.

Die Erfindung betrifft ebenfalls ein Verfahren zur Herstellung von Filtermaterial.

In Abgassystemen mobiler Verbrennungskraftmaschinen werden eine Vielzahl unterschiedlicher Materialien eingesetzt, die in besonderem Maße hohen Temperaturen, aggressiven Gasen sowie erheblichen Erschütterungen ausgesetzt sind. Trotz dieser widrigen Umgebungsbedingungen müssen diese Materialien ihre Funktion über einen möglichst langen Zeitraum aufrecht erhalten. Die Funktion richtet sich im wesentlichen nach der Art der Abgasbehandlungseinrichtung, die mit den Materialien gebildet werden. Mögliche Abgasbehandlungseinrichtungen sind katalytische Konverter, Adsorber, Partikelfilter, Mischer, Dämmmatten, Dichtungen, etc.. Die Materialien müssen in der Regel hochtemperaturfest und korrosionsbeständig sein. Hierfür bieten sich neben keramischen Materialien insbesondere metallische Komponenten an.

Bei den oben genannten Abgasbehandlungseinrichtung werden z. T. auch metallische Fasern eingesetzt. Dabei rücken metallische Fasern insbesondere als Dämmmaterial und Filtermaterial immer stärker in den Mittelpunkt des Interesses. Da es sich hierbei um Bauteile bzw. Materialien handelt, die überwiegend im Automobilbau eingesetzt werden, ist es von besonderem Interesse, eine preiswerte Herstellung derartiger metallischer Fasern mit einer hohen Ausbringung zu realisieren. Aufgrund der Sensibilität bzw. Störungsempfindlichkeit von Abgassystemen mobiler Verbrennungskraftmaschinen, die z. T. mit sehr empfindlicher Elektronik, Sensoren, etc. ausgeführt sind, ist es besonders wichtig, dass die Fasermaterialien eine hohe Lebensdauer haben und auch eine möglichst hohe Gestaltfestigkeit. Nur so kann verhindert werden, dass sich durch die beachtlichen Temperatur-und Druckunterschiede Teile der metallischen Fasern während des Betriebes ablösen, die ggf. von der Abgasströmung mitgerissen werden und auf stromabwärts angeordnete Abgasbehandlungseinrichtungen auftreffen könnten.

In der JP 2000-167 721 A wird ein Verfahren zur Herstellung gleichförmiger Metallfasern beschrieben, wobei die Fasern direkt aus einem Metalblock mittels Umfangsfräsen erzeugt werden. Hierzu wird vorgeschlagen, mit einem Fräser gleichmäßige metallische Fasern von einem Blockmaterial (z.B. Kupfer) abzuheben. Zur Beschleunigung des Herstellungsverfahrens wird vorgeschlagen, mehrere Fräsblätter beabstandet zueinander einzusetzen. In dem Zwischenabstand zwischen den einzelnen Fräsblättern bleibt Material des Blockes stehen, das bei schichtweise durch nachgelagerte Fräsprozesse abgetragen wird.

In der US 4,640,156 wird ein Verfahren zur Herstellung kurzer nadelförmiger Metallfasern beschrieben, wobei die Fasern direkt aus einem Metallblock mittels eines Schneidwerkzeugs bei Drehung des Metallblocks erzeugt werden. Hierfür wird eine Vibration im Bereich von 1 bis 7 kHz erzeugt, die einen entsprechenden kurzen intermittierenden Eingriff des Schneidwerkzeuges mit dem Metallblock zur Folge hat.

Zudem geht noch aus der JP 58-071002 A ein Verfahren hervor, bei dem kurze Fasern mittels eines Umfangsfräsers aus einem Metallblock abgetrennt werden. Dabei sind elastische Schneiden vorgesehen, die beim Eingriff eine Vibration und damit mehrere Kurzfasern erzeugen.

Solche Vibrationen während des Werkzeugeingriffs sind jedoch teilweise schwer zu kontrollieren und nur mit erhöhtem technischen Aufwand zu realisieren. Aufgabe der vorliegenden Erfindung ist es, ein hierfür geeignetes Verfahren vorzuschlagen. Dieses soll insbesondere auf die Bedürfnisse einer Serienfertigung für Abgasbehandlungseinrichtungen im Automobilbau geeignet sein. Gleichzeitig sollen möglichst gleichmäßig geformte Fasern generiert werden. Außerdem sollen eine einfach aufgebaute Vorrichtungen zur Herstellung von metallischen Fasern sowie Bauteile und Komponenten zur verbesserten Abgasbehandlung mobiler Verbrennungskraftmaschinen aufgezeigt werden.

Dies wird erreicht durch ein Verfahren zur Herstellung metallischer Fasern, wie es mit den Schritten des Patentanspruchs 1 beschrieben ist. Weitere vorteilhafte Ausgestaltungen des Verfahrens sind in den davon abhängig formulierten Patentansprüchen beschrieben. Weiterhin werden die Zielsetzungen mit einer Vorrichtung umfassend eine Werkstückaufnahme zur Fixierung mindestens eines Metallblocks und einem Werkzeug mit den Merkmalen des unabhängig formulierten Vorrichtungs-Patentanspruch erreicht. In diesem Zusammenhang ist darauf hinzuweisen, dass die in den Patentansprüchen einzeln aufgeführten Merkmale sich in beliebiger, technologisch sinnvoller Weise miteinander kombinieren lassen und zu weiteren Ausgestaltungen der Erfindung führen. Gleichermaßen kann der Inhalt der Beschreibung zur Spezifizierung der Patentansprüche herangezogen werden.

Bei dem erfindungsgemäßen Verfahren zur Herstellung metallischer Fasern sind zumindest die folgenden Schritte umfasst:
(a) Bereitstellen wenigstens eines Metallblocks;
(b) Abtragen von Fasern mittels eines spanabhebenden Fertigungsverfahrens durch Einsatz wenigstens eines rotierenden Werkzeuges.
wobei die spanabhebende Bearbeitung in angrenzenden Ebenen nacheinander durchgeführt wird, wobei der Eingriff des mindestens einen rotierenden Werkzeugs in den mindestens einen Metallblock in angrenzenden Ebenen derart versetzt erforgt, dass Fasern mit einer variierenden Höhe oder einer Sollbruchstelle gestaltet werden,

Mit einer Faser ist insbesondere ein feines, dünnes, längliches Gebilde gemeint Eine Faser ist demnach ein Gebilde, bei dem bevorzugt der Durchmesser deutlich kleiner als die Länge ist, insbesondere beträgt das Verhältnis von Länge/Durchmesser mindestens 10, bevorzugt 100 oder sogar 1000.

Die Fasern sind aus Metall, wobei das Material im wesentlichen dem des eingesetzten Metallblocks entspricht. Vorteilhafterweise ist dieses Metall ein Eisenwerkstoff, der zumindest einen der Bestandteile Aluminium und Chrom aufweist, bevorzugt sogar beide. Das metallische Material ist vorteilhafterweise duktil und hochtemperaturfest. Die aufgeführten Legierungsbestandteile dienen einem hohen Korrosionsschutz gegen die im Abgas enthaltenen Schadstoffe mobiler Verbrennungskraftmaschinen.

Die Faserherstellung erfolgt hierbei durch ein spanabhebendes Fertigungsverfahren, welchem der Metallblock ausgesetzt wird. Dabei greift das rotierende Werkzeug mit definierter Schneide in den Metallblock bzw. dessen Oberfläche ein und trennt die Fasern aus dem Vollmaterial. Die erforderliche (Haupt)-Relativgeschwindigkeit bzw. (Haupt-)Relativbewegung zwischen Werkzeug und Metallblock wird durch das Werkzeug ausgeführt. Dieses rotiert um seine eigene Achse. Diese werkzeugeigene Rotationsbewegung wird durch eine zusätzliche translatorische (Neben-)Relativbewegung zwischen Metallblock und Werkzeug überlagert, dem sogenannten Vorschub. Dabei werden Werkstück und Werkzeug gegeneinander mit einer vorgebbaren (meist konstanten) Geschwindigkeit bewegt, so dass die Schneiden des Werkzeugs mit einer vorgebbaren Eindringtiefe in den Metallblock eindringen. Aus diese Weise werden gleichmäßige Fasern hergestellt.

Weiter ist vorgesehen, dass die spanabhebende Bearbeitung in angrenzenden Ebenen nacheinander durchgeführt wird, wobei der Eingriff des mindestens einen rotierenden Werkzeugs in den mindestens einen Metallblock in angrenzenden Ebenen versetzt erfolgt. Dem liegt der Gedanke zugrunde, dass während einer Bearbeitung des Metallblocks in der Oberfläche nahe der Schnittkante Unebenheiten erzeugt werden, z. B. Rillen, Riefen, Erhebungen, etc.. Hier wird nun vorgeschlagen, dass in einem nachfolgenden Bearbeitungsschritt, in dem die nächste obere Lage des Metallblocks abgenommen wird, ein solcher Versatz realisiert wird, dass die nun gebildeten Unebenheiten nicht in einer senkrechten Ebene zu den Unebenheiten der darüber liegenden Ebene angeordnet sind. Bevorzugt liegt dabei der Versatz in Bereich der Hälfte der Dicke der Faser. Je nach Einstellung des Vorschubes bzw. der Rotationsdrehzahl sowie der Anzahl der Schneiden können somit unter Umständen Sollbruchstellen in den Fasern generiert werden. Diese ermöglichen auf eine einfache Weise dann eine weitere Reduzierung des Querschnitts der Faser durch zusätzliche Bearbeitungsschritte. Außerdem können so besondere, beispielsweise nahezu runde, ellipsenförmige oder vieleckige Querschnitte generiert werden.

Gemäß einer Weiterbildung des Verfahrens wird das Abtragen von Fasern mittels Stirnfräsen durchgeführt. Mit Fräsen ist hier insbesondere ein spanabhebendes Fertigungsverfahren mit kreisförmiger Schnittbewegung eines meist mehrzahnigen Werkzeugs zur Erzeugung beliebiger Werkstückoberflächen zu verstehen. Die Schnittbewegung verläuft senkrecht oder auch schräg zur Drehachse des Werkzeugs. Bei der Unterteilung der Fräsverfahren werden generell beispielsweise nach der erzeugten Oberfläche, der Werkzeugform (Profil) und/oder der Kinematik unter anderem in Planfräsen, Rundfräsen, Wälzfräsen, Formfräsen und Profilfräsen unterteilt.

Wird die Werkstückoberfläche von der Stirnseite des Werkzeugs mit den sogenannten Nebenschneiden erzeugt, spricht man vom Stirnfräsen. Dementsprechend wird ein Fräsverfahren, bei dem die Oberfläche durch die Schneiden am Fräserumfang erzeugt wird, als Umfangsfräsen bezeichnet. Je nach Werkzeugdreh- und Vorschubrichtung unterscheidet man weiter zwischen Gegenlauf- und Gleichlauffräsen. Beim Gegenlauffräsen laufen Vorschub- und Schnittbewegung gegeneinander, während sie beim Gleichlauffräsen in dieselbe Richtung weisen. Bei dem hier besonders bevorzugten Stirnfräsen bzw. Stirn-Planfräsen ist die Eingriffsgröße (entspricht im wesentlichen der Länge der Faser) deutlich größer als die Schnitttiefe (entspricht im wesentlichen der Höhe der Faser), und die Werkstückoberfläche wird durch die Nebenschneide erzeugt, also die Schneidenanteile, die an der Stirnseite des Fräsers angeordnet sind. Der Stirnfräser wird bevorzugt mit einem Vorschub im Bereich von 10 bis 100 µm [Mikrometern] pro Umdrehung betrieben.

Mit dem hier vorgeschlagenen Fräsverfahren lassen sich in einem besonders kurzen Zeitraum eine sehr große Anzahl von gleichmäßigen Fasern generieren. Dabei wird dieser Prozess in der Regel so lange wiederholt, bis schließlich der Metallblock aufgebraucht ist. Grundsätzlich sei noch erwähnt, dass selbstverständlich auch eine Mehrzahl von Fräsern gleichzeitig einen solchen Metallblock bearbeiten können, zusätzlich Kühl- und/oder Schmiermittel eingesetzt werden können und/oder andere Bearbeitungsprozesse parallel ablaufen können (z. B. Nachschleifen der gefrästen Oberfläche, etc.).

Gemäß einer Weiterbildung des Verfahrens werden Fasern mit einer Dicke im Bereich von 10 µm bis 100 µm [Mikrometer] abgetragen. Bevorzugt liegt die Dicke im Bereich von 20 µm bis 30 µm. Die Einstellung der gewünschten Dicke, sowie auch der gewünschten Länge bzw. Höhe, der Fasern wird durch eine entsprechende Wahl von Drehzahl des rotierenden Werkzeuges und dem Vorschub eingestellt. Gleichzeitig sind dabei auch die Geometrien der in Eingriff gelangenden Schneiden zu berücksichtigen.

Weiter wird vorgeschlagen, dass Fasern mit einer Länge im Bereich von 1 mm bis 50 mm [Millimeter], vorzugsweise im Bereich von 15 mm bis 25 mm, abgetragen werden.

Besonders vorteilhaft ist es, dass Fasern mit einer Höhe im Bereich von 10 µm bis 100 µm [Mikrometer] abgetragen werden. Auch hier liegt der bevorzugte Bereich bei 20 µm bis 30 µm.

Die hier angegebenen Dimensionen sind insbesondere für Fasern zu wählen, die als Teilkomponente von Abgasbehandlungseinrichtungen eingesetzt werden. Damit weisen die Fasern die erforderlichen Querschnitte auf, um dauerhaft den thermischen und dynamischen Belastungen standzuhalten. Darüber hinaus gewährleisten sie beispielsweise eine spezifische Oberfläche, die wesentlich für einen innigen Kontakt mit dem Abgas ist. Weiter ist zu berücksichtigen, dass sie damit auch die Möglichkeit geeigneter Knotenpunkte bereitstellen, wie sie beispielsweise durch das Verbinden mehrerer Fasern generiert werden. Die dabei auftretenden fügetechnischen und/oder stofftechnischen Verbindungen sind ausreichend widerstandsfest.

Gemäß einer vorteilhaften Weiterbildung des Verfahrens wird das mindestens eine Werkzeug mit einer vorgebbaren Drehzahl rotiert und mit einem vorgebbaren Vorschub relativ zu den wenigstens einen Metallblock bewegt, wobei die Drehzahl und der Vorschub so gewählt sind, dass die Fasern zumindest über 50 % ihrer Länge eine einheitliche Dicke aufweisen. Damit wird sichergestellt, dass die Fasern zumindest über einen großen Anteil ihrer Länge im wesentlichen gleich ausgeführt sind und somit gerade bei einem nachfolgenden Zusammenführen der Fasern zu einem Gewebe, Gestrick, etc. ausreichend große Kontaktregionen benachbarter Fasern zueinander bereitgestellt werden. Vorteilhafterweise haben die Fasern zumindest über 80 % ihrer Länge eine einheitliche Dicke, bevorzugt um sogar über 90 bzw. 95 %. Zur Klarstellung sei darauf hingewiesen, dass der Ausdruck "einheitliche Dicke" gleichwohl so zu verstehen ist, dass damit auch noch gewisse Fertigungstoleranzen umfasst sind. Welche Fertigungstoleranzen hierunter zu subsumieren sind, hängt vorwiegend von der Herstellungsmethode ab; hier beim Fräsen können diese zulässiger Weise z.B. in einem Bereich von ⁺/- 20 % um einen Mittelwert schwanken.

Weiter wird auch vorgeschlagen, dass der mindestens eine Metallblock eine Bearbeitungsfront hat, die im wesentlichen einem Profil des Werkzeugs entspricht. Damit ist insbesondere gemeint, dass sich die Bearbeitungsfront, also die front des Metallblocks, in die das rotierende Werkzeug eingreift, sich im wesentlichen an das Profil des Werkzeugs "anschmiegt". Das bedeutet beispielsweise, dass die Bearbeitungsfront mit einem Radius ausgeführt ist, der im wesentlichen dem Radius des Werkzeugs entspricht. Damit soll gewährleistet werden, dass sich die Schnittparameter während des gesamten Bearbeitungsprozesses, also vom Eintauchen bis zum Ausfahren des Werkzeuges aus dem Metallblock nicht ändern. Hierzu ist es vorteilhaft, wenn eine entsprechende Rückfront des Metallblocks vorgesehen ist, die also den gleichen Radius wie das Werkzeug umfasst. Damit ist die Bearbeitungsfront vorteilhafterweise konkav ausgestaltet, während die Rückfront konvex gestaltet ist. Dabei ist das rotierende Werkzeug mittig zur Bearbeitungsfront zu positionieren und mit einem Vorschub zu versehen.

Außerdem wird ein Verfahren zur Herstellung von Filtermaterial vorgeschlagen, wobei Fasern zunächst in der oben beschriebenen Weise hergestellt und anschließend fügetechnisch miteinander verbunden werden, wobei eine gasdurchlässige Lage gebildet wird. Zum fügetechnischen Verbinden kann Zusatzmaterial eingesetzt werden, es ist jedoch auch möglich, dass die Fasern miteinander durch Einwirkung von Druck und/oder Temperatur miteinander einen Stoffschluss eingehen (z. B. Schweißen, Sintern etc.). Dabei können die Fasern zueinander ausgerichtet oder chaotisch positioniert werden. Damit wird schließlich eine gasdurchlässige Lage gebildet, wobei das Fluid bzw. das Gas durch die Hohlräume der Lage, wie sie mit den Fasern gebildet werden, hindurchströmen kann. Die Lage hat bevorzugt eine Lagendicke im Bereich kleiner 4 mm [Millimeter], insbesondere kleiner 2 mm. Durch die Anordnung der Fasern zueinander wird eine Porosität der Lage im Mittel von etwa 40 bis 90 % bereitgestellt. Diese Lage wird bevorzugt zum Auffangen von Rußpartikeln oder anderen Feststoffen eingesetzt, die im Abgasstrom eines Motors mitgeführt werden. Hierfür kann das Filtermaterial weitere Materialien umfassen wie z.B. eine Beschichtung, Metallschaum, Keramikschaum, eine Stützstruktur, einen Katalysator, etc..

Nun wird eine Vorrichtung umfassend eine Werkstückaufnahme zur Fixierung mindestens eines Metallblocks und mindestens ein rotierendes Werkzeug angegeben das zur Durchführung des oben beschriebenen, erfindungsgemäßen, Verfahrens mit mindestens einem Metallblock in Eingriff gebracht werden kann, wobei das mindestens eine rotierende Werkzeug einen mehrschneidigen Fräser, insbesondere einen Stirnfräser, umfasst. Mit Fräser sind insbesondere Werkzeuge zur Spanabhebung gerneint, die mehrere Schneiden aufweisen bzw. deren Schneide mehrfach geschlitzt oder unterbrochen ist. Die Schneiden des Fräsers sind bevorzugt gleichmäßig voneinander beabstandet und am Umfang und/oder an einer Stirnseite angeordnet. Besonders bevorzugt ist in diesem Zusammenhang eine NC-Universal-Fräsmaschine der Konsolenbauart. Der in der Höhe verstellbare Werkzeugtisch mit der Werkstückaufnahme übernimmt zusätzlich eine zwei-dimensionale Horizontalbewegung (z.B. zur Verwirklichung des Vorschubes). Die dritte Verfahrensachse (z.B. für die Einstellung der Schnitttiefe) liegt in dem Spindelstock für den Antrieb des rotierenden, mehrschneidigen Stirnfräsers.

Alternativ dazu kann auch die Kreuzbettbauweise eingesetzt werden, wobei man damit die Ausführungen bezeichnet, bei denen zwei senkrechte Vorschubbewegungen auf dem Bett realisiert werden, und die eine der werkzeugtragenden Baugruppe (meist Ständer) die andere der werkstücktragenden Baugruppe (meist Tische) zugeordnet ist. Dabei gibt es unterschiedliche Möglichkeiten, diese Bewegungsachsen zu realisieren. Bevorzugt wird dabei die horizontale Bewegung vom Tisch bzw. der Werkstückaufnahme durchgeführt, während die vertikale Bewegung durch das rotierende Werkzeug durchgeführt wird.

Als Stirnfräser wird bevorzugt eine Messerkopfstirnfräser mit Werkzeugkassetten eingesetzt, wobei beispielsweise geklemmte Hartmetallwendeschneidplatten als Schneiden eingesetzt werden. Ein solcher Messerkopfstimfräser hat einen Durchmesser bis zu 250 mm [Millimeter]. Vorliegend werden bevorzugt Schnittgeschwindigkeiten (v_{c}) im Bereich von 1 bis 20 m/min [Meter pro Minute], ein Vorschub je Zahn (f_{z}) im Bereich von 0,02 bis 0,1 mm [Millimeter] und eine Schnitttiefe (aₑ) im Bereich von 0,02 mm bis 0,1 mm [Millimeter] realisiert.

Die Fasern, die mit dem erfindungsgemäßen Verfahren bzw. der dargestellten Vorrichtung hergestellt werden, zeichnet sich durch eine hohe Formgenauigkeit aus und bilden damit den Grundstein für Abgasbehandlungskomponenten, die dauerhaft im Abgassystem mobiler Verbrennungskraftmaschinen eingesetzt werden können.

So kann beispielsweise ein Filtermaterial zumindest teilweise aus solchen Fasern gebildet werden. Das Filtermaterial wird dabei vom Abgas durchströmt, so dass im Abgas enthaltene Partikel oder Feststoffe sich an den Fasern bzw. einer darauf versehenen Beschichtung anlagern. Durch Einsatz von Reduktionsmitteln oder auf andere Weise, beispielsweise durch Erhöhung der Temperatur, kann das Filtermaterial nun kontinuierlich oder zu vorgegebenen Zeitpunkten diskontinuierlich regeneriert werden, wobei die Feststoffe zumindest teilweise in gasförmige Bestandteile umgewandelt werden.

Mit einem solchen Filtermaterial lassen sich beispielsweise Partikelfilter für Abgassysteme verschiedener Motoren (Dieselmotor, Ottomotor, etc.) bereitstellen, die sich durch eine hohe Lebensdauer und eine hohe Effektivität auszeichnen. Der Partikelfilter kann dabei allein aus Filtermaterial gebildet sein, es ist jedoch bevorzugt, dass das Filtermaterial nur Teil des Partikelfilters darstellt. Dabei werden ganz besonders bevorzugt Kanäle mit zumindest teilweise strukturierten Blechlagen gebildet, wobei das Filtermaterial zumindest teilweise eine solche Kanalwand begrenzt. Die Blechfolien sind so gestaltet, dass das hindurchgeführte Abgas bzw. die darin enthaltenen Partikel hin zu dem Filtermaterial ablenkt. Wird und somit die Partikelbahn durchströmen des Filtermaterials in diesem eingelagert werden.

Besonders vorteilhaft ist es, mindestens eine Abgasbehandlungskomponente mit Filtermaterial und/oder einem Partikelfilter der vorstehend beschriebenen Art in ein Fahrzeug zu integrieren. Mit Fahrzeug sind insbesondere Personenkraftwagen, Lastkraftwagen, Motorboote, Motorflugzeuge, etc. gemeint.

Die Erfindung wird nachfolgend anhand der Figuren näher erläutert. Dabei zeigen die Figuren neben dem technologischen Hintergrund besonders bevorzugte Ausgestaltungen der Erfindung, auf die diese jedoch nicht begrenzt ist. Es zeigen:
- Fig. 1: schematisch die Bearbeitung eines Metallblocks mittels eines rotierenden Werkzeugs;
- Fig. 2: schematisch und perspektivisch das Stirnfräsen;
- Fig. 3: Detailansichten des Metallblocks nach einer Bearbeitung;
- Fig. 4: ein Fahrzeug mit einem Fasern aufweisenden Partikelfilter; und
- Fig. 5: ein Detail des Partikelfilters aus Fig. 4.

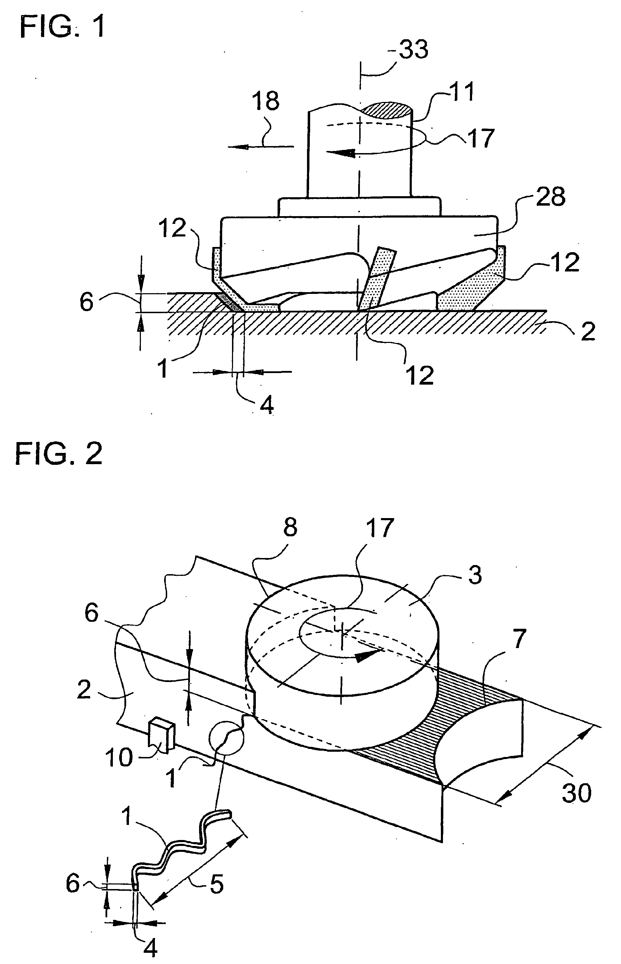

Fig. 1 zeigt schematisch in einer seitlichen Ansicht einen Stirnfräser 11, der um seine Achse 33 in Dreh-Richtung 17 rotiert werden kann. Der Stirnfräser 11 weist einen Grundkörper 28 mit mehreren Schneiden 12 auf. In der dargestellten Ausführungsform ist der Stirnfräser 11 mit 4 am Umfang gleichmäßig verteilt angeordneten Schneiden 12 ausgeführt, es können jedoch auch 6 Schneiden, 8 Schneiden, zwölf 12 oder noch mehr Schneiden sein. Der Stirnfräser 11 wird mit einer Vorschub-Richtung 18 gegenüber dem Metallblock 2 bewegt, wobei üblicherweise diese Relativbewegung durch den Metallblock 2 bzw. den Werkstück-Tisch generiert wird. Die Schneiden 12 gelangen bei der Durchführung des Verfahrens in Eingriff mit dem Metallblock 2, wobei Fasern 1 mit einer Höhe 6 und einer Dicke 4 herausgetrennt werden.

In Fig. 2 ist die Vorrichtung sowie das Verfahren zur Herstellung der Fasern 1 schematisch und perspektivisch dargestellt. Der Metallblock 2 wird mit der Werkstückaufnahme 10 fixiert. Um ein gleichmäßiges Eindringen des rotierenden Werkzeugs 3 in den Metallblock 2 zu gewährleisten, weist dieser eine Bearbeitungsfront 7 auf, die im wesentlichen dem Profil 8 des Werkzeugs 3 entspricht. Dabei ist das Profil 8 des Werkzeugs 3 gemeint, welches zuerst mit dem Metallblock 2 in Eingriff gelangt. In der dargestellten Ausführungsvariante ist das rotierende Werkzeug 3 mit einem Durchmesser versehen, der größer ist als die Breite 30 des Metallblocks 2. Damit handelt es sich hier um das Fertigungsverfahren Stirnplanfräsen. Dabei wird der Metallblock 2 in einzelnen Schichten entlang vorgegebenen Bearbeitungsebenen abgetragen, wobei die Fasern 1 generiert werden. Die Faser 1 ist unten links in Fig. 2 noch im Detail dargestellt. Gekennzeichnet sind dabei insbesondere die Höhe 6, die Dicke 4 und die Länge 5 der Faser 1.

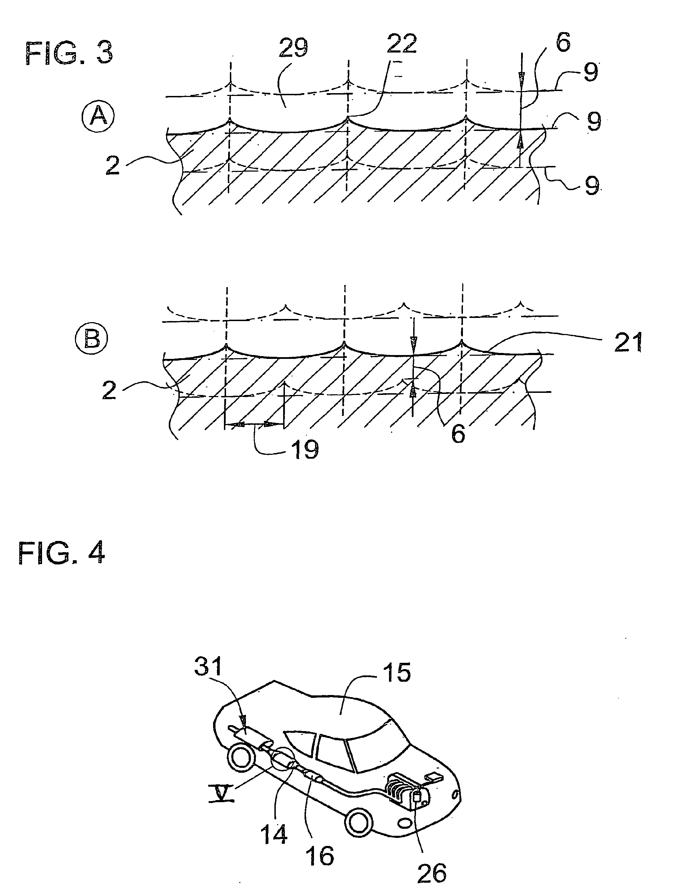

Fig. 3 zeigt nun zwei Details des Metallblocks 2 im Querschnitt, wobei insbesondere die Oberflächenbeschaffenheit des Metallblocks 2 nach einer Bearbeitung mit dem rotierenden Werkzeug 3 dargestellt ist. Die Abtragung der Fasern 1 vom Metallblock 2 geschieht in unterschiedlichen Ebenen 9, die bevorzugt einen gleichbleibenden Abstand zueinander aufweisen. Durch die Bearbeitung mit den Schneiden 12 des rotierenden Werkzeuges 3 werden nicht-glatte Oberflächen 21 generiert, wobei sich insbesondere die dargestellten Erhebungen 22 ausbilden.

In der mit "A" gekennzeichneten Herstellungsvariante, die nicht unter die Ansprüche fällt, liegen die Erhebungen 22 benachbarter Ebenen 9 auf einer im wesentlichen senkrechten Linie bzw. Ebene. Das bedeutet, dass alle Fasern 1 mit einem Querschnitt 29 produziert werden, der über die gesamte Dicke 4 die gleiche Höhe 6 aufweist.

Im Gegensatz dazu ist bei der mit "B" gekennzeichneten , erfindungsgemäßen Verfahrensvariante ein Versatz 19 bezüglich der benachbarten Ebenen 9 verwirklicht. Dabei werden Fasern 1 mit variierender Höhe 6 gestaltet, wobei die geringste Höhe 6 mittig zur Dicke 4 der Faser 1 ausgebildet wird, wenn der Versatz 19 in etwa der Hälfte der Dicke 4 der Faser 1 entspricht.

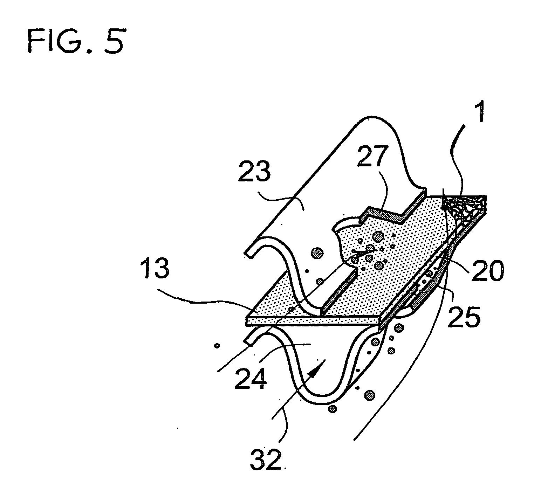

Fig. 5 zeigt nun schematisch den bevorzugten Einsatz solcher Fasern 1 im Automobilbereich. Die Fasern 1 wurden hier zu einer Lage 20 miteinander verbunden und mit einer Beschichtung versehen. Diese Lage 20 ist zwischen teilweise strukturierten Metallfolien 23 angeordnet, die mehrere, parallel zueinander angeordnete Kanäle 24 bilden. Die Metallfolien 23 weisen zudem eine Mikrostruktur 27 auf, die das Umlenken von Abgasen hin zum Filtermaterial 13 bzw. der Faserlage 20 bewirken. Dabei wird das Abgas zunächst in Strömungsrichtung 32 in die Kanäle 24 hineinströmen und aufgrund der Mikrostruktur 27 abgelenkt, so dass sich der darin enthaltene Ruß 25 in der Lage 20 anlagert. Der Ruß 20 wird kontinuierlich regeneriert.

Das dargestellte Detail aus Fig. 5 ist einem Partikelfilter 14 entnommen, der im Abgassystem 31 einer mobilen Verbrennungskraftmaschine 26 des Fahrzeugs 15 positioniert ist (siehe Fig. 4). Vor dem Partikelfilter 14, d.h. zwischen der Verbrennungskraftmaschine 26 und dem Partikelfilter 14, ist eine weitere Abgasbehandlungskomponente 16 angeordnet, beispielsweise ein Oxidationskatalysator, der die im Abgas enthaltenen Stickoxide umwandelt um eine kontinuierliche Regeneration des Rußes im Partikelfilter 14 zu ermöglichen.

### Bezugszeichenliste

- 1: Faser
- 2: Metallblock
- 3: Werkzeug
- 4: Dicke
- 5: Länge
- 6: Höhe
- 7: Bearbeitungsfront
- 8: Profil
- 9: Ebene
- 10: Werkstückaufnahme
- 11: Stirnfräser
- 12: Schneide
- 13: Filtermaterial
- 14: Partikelfilter
- 15: Fahrzeug
- 16: Abgasbehandlungskomponente
- 17: Dreh-Richtung
- 18: Vorschub-Richtung
- 19: Versatz
- 20: Lage
- 21: Oberfläche
- 22: Erhebung
- 23: Metallfolie
- 24: Kanal
- 25: Ruß
- 26: Verbrennungskraftmaschine
- 27: Mikrostruktur
- 28: Grundkörper
- 29: Querschnitt
- 30: Breite
- 31: Abgassystem
- 32: Strömungsrichtung
- 33: Achse

## Patentansprüche

1. Verfahren zur Herstellung metallischer Fasern (1) umfassend zumindest die folgenden Schritte:
(a) Bereitstellen wenigstens eines Metallblocks (2);
(b) Abtragen von Fasern (1) mittels eines spanabhebenden Fertigungsverfahren durch Einsatz wenigstens eines rotierenden Werkzeuges (3),
wobei die spanabhebende Bearbeitung in angrenzenden Ebenen (9) nacheinander durchgeführt wird dadruch gekennzeichnet, dass der Eingriff des mindestens einen rotierenden Werkzeuges (3) in den mindestens einen Metallblock (2) in angrenzenden Ebenen (9) derart versetzt erfolgt, dass Fasern (1) mit einer variierenden Höhe (6) oder einer Sollbruchstelle gestaltet werden.

2. Verfahren nach Anspruch 1, bei dem Schritt (b) mittels Stirnfräsen durchgeführt wird.

3. Verfahren nach Anspruch 1 oder 2, bei dem Fasern (1) mit einer Dicke (4) im Bereich von 10 µm bis 100 µm [Mikrometer] abgetragen werden.

4. Verfahren nach einem der vorstehenden Ansprüche, bei dem Fasern (1) mit einer Länge (5) im Bereich von 1 mm bis 50 mm [Millimeter] abgetragen werden.

5. Verfahren nach einem der vorstehenden Ansprüche, bei dem Fasern (1) mit einer Höhe (6) im Bereich von 10 µm bis 100 µm [Mikrometer] abgetragen werden.

6. Verfahren nach einem der vorstehenden Ansprüche, bei dem das mindestens eine Werkzeug (3) mit einer vorgebbaren Drehzahl rotiert und mit einem vorgebbaren Vorschub relativ zu dem wenigstens einen Metallblock (2) bewegt wird, wobei die Drehzahl und der Vorschub so gewählt sind, dass die Fasern (1) zumindest über 50 % ihrer Länge (5) eine einheitliche Dicke (4) aufweisen.

7. Verfahren nach einem der vorstehenden Ansprüche, bei dem der mindestens eine Metallblock (2) eine Bearbeitungsfront (7) hat, die im wesentlichen einem Profil (8) des Werkzeugs (3) entspricht.

8. Verfahren zur Herstellung von Filtermaterial (13), wobei Fasern (1) zunächst nach einem der vorhergehenden Ansprüche hergestellt und anschließend fügetechnisch miteinander verbunden werden, wobei eine gasdurchlässige Lage (20) gebildet wird.

## Claims

1. A method for producing metal fibers (1) comprising at least the following steps:
(a) Provision of at least one metal block (2);
(b) Removal of fibers (1) by means of a machining manufacturing method using at least one rotating tool (3),
wherein the machining manufacturing method in adjacent planes (9) is performed consecutively, **characterized in that** the at least one rotating tool (3) engages in the at least one metal block (2) with an offset in adjacent planes (9), so that fibers (1) having varying height (6) or a predetermined breaking point are generated.

2. The method as claimed in claim 1, in which the step (b) is performed by face milling.

3. The method as claimed in claim 1 or 2, in which fibers (1) with a thickness (4) in the range from 10 µm to 100 µm [micrometers] are removed.

4. The method as claimed in one of the preceding claims, in which fibers (1) with a length (5) in the range from 1 mm to 50 mm [millimeters] are removed.

5. The method as claimed in one of the preceding claims, in which fibers (1) with a height (6) in the range from 10 µm to 100 µm [micrometers] are removed.

6. The method as claimed in one of the preceding claims, in which the at least one tool (3) rotates at a predeterminable speed and is moved with a predeterminable infeed rate relative to the at least one metal block (2), wherein the speed and infeed rate are selected such that the fibers (1) have a uniform thickness (4) over at least 50% of their length (5).

7. The method as claimed in one of the preceding claims, in which the at least one metal block (2) has a machining front (7) that essentially corresponds to a profile (8) of the tool (3).

8. A method for producing filter material (13), in which fibers (1) are first produced in the manner according to one of the preceding claims and then joined together so that a gas-permeable layer (20) is formed.

## Revendications

1. Procédé de fabrication de fibres métalliques (1), comprenant au moins les étapes suivantes :
(a) La mise à disposition d'au moins un bloc métallique (2) ;
(b) l'enlèvement de fibres (1) par un procédé de fabrication d'enlèvement de copeaux par la mise en oeuvre d'au moins un outil en rotation (3),
l'usinage par enlèvement de copeaux étant effectué l'un après l'autre dans des plans adjacents (9), **caractérisé en ce que** l'engagement de l'au moins un outil en rotation (3) dans l'au moins un bloc métallique (2) est effectué de telle façon de manière décalée dans des plans adjacents (9), que des fibres (1) sont réalisées avec une hauteur variante (6) ou un point destiné à la rupture.

2. Procédé selon la revendication 1, dans lequel l'étape (b) est effectuée au moyen de fraisage en bout.

3. Procédé selon la revendication 1 ou 2, dans lequel des fibres (1) d'une épaisseur (4) dans l'étendue de 10 □m à 100 □m [micromètres] sont enlevées.

4. Procédé selon l'une des revendications précédentes, dans lequel des fibres (1) d'une longueur (5) dans l'étendue de 1 mm à 50 mm [millimètres] sont enlevées.

5. Procédé selon l'une des revendications précédentes, dans lequel des fibres (1) d'une hauteur (6) dans l'étendue de 10 □m à 100 □m [micromètres] sont enlevées.

6. Procédé selon l'une des revendications précédentes, dans lequel l'au moins un outil (3) est en rotation à une vitesse de rotation pouvant être prédéterminée et est déplacé vers l'au moins un bloc métallique (2) avec un avancement pouvant être prédéterminé, la vitesse de rotation et l'avancement étant choisis de manière telle que les fibres (1) ont au moins sur 50 % de leur longueur (5) une épaisseur unitaire (4).

7. Procédé selon l'une des revendications précédentes, dans lequel l'au moins un bloc métallique (2) a un front d'usinage (7), qui correspond sensiblement à un profil (8) de l'outil (3).

8. Procédé destiné à la fabrication de matériau de filtre (13), des fibres (1) étant d'abord fabriquées selon l'une des revendications précédentes et ensuite reliées les unes aux autres par technique de jointoiement, une couche perméable au gaz (20) étant formée.
